# EUROPEAN PATENT APPLICATION

(11) **EP 1 126 658 A2**
(43) Date of publication of application: **22.08.2001**
(21) Application number: 01102781.0
(22) Date of filing: 08.02.2001
(51) Int. Cl.: H04L 12/24, H04L 12/56

(54) **Route design system and route design method capable of realizing high-speed accomodation design**

(30) Priority: 09.02.2000 JP 2000031345
(71) Applicant: NEC CORPORATION, Tokyo (JP)
(72) Inventor: Soga, Kenji, c/o NEC Corporation, Minato-ku, Tokyo (JP)
(74) Representative: VOSSIUS & PARTNER

(57) **Abstract**

A route candidate design unit 31 designs route candidates among nodes, and assigns available bands for the individual route candidates. The route candidate design unit 31 also arrays the individual route candidates in the order of priorities. A primary accommodation design unit 33 tries accommodation of a demand in a route candidate of a first priority. Where the route candidate of the first priority has a sufficient space band, the primary accommodation design unit 33 ends the design by accommodating the demand in the first priority route candidate. Where the space band is not sufficient, a secondary accommodation design unit 34 tries to accommodate the demand in a route of a second priority.

## Description

The present invention relates to a route design system and a route design method and, more particularly, to a route design system and a route design method for communication networks.

One example of the route design system for communication networks is disclosed in Japanese Patent Publication (JP-B) No. 2500618 (as will be called the "document"). Fig. 1 is a flow chart for explaining the route design system.

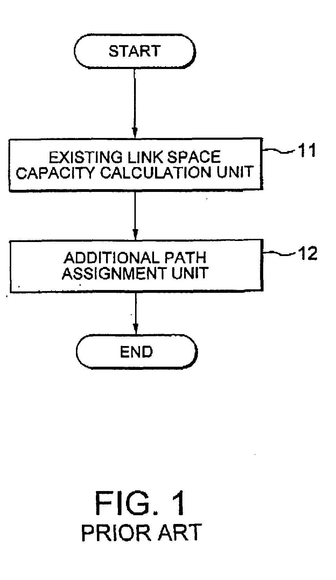

With reference to Fig. 1, the route design system is constructed to include an existing link space capacity calculation unit 11 and an additional path assignment unit 12. The existing link space capacity calculation unit 11 creates existing transmission link space information by classifying such paths according to the speeds of the paths as can be accommodated when transmission rates of the paths are designated to existing individual links.

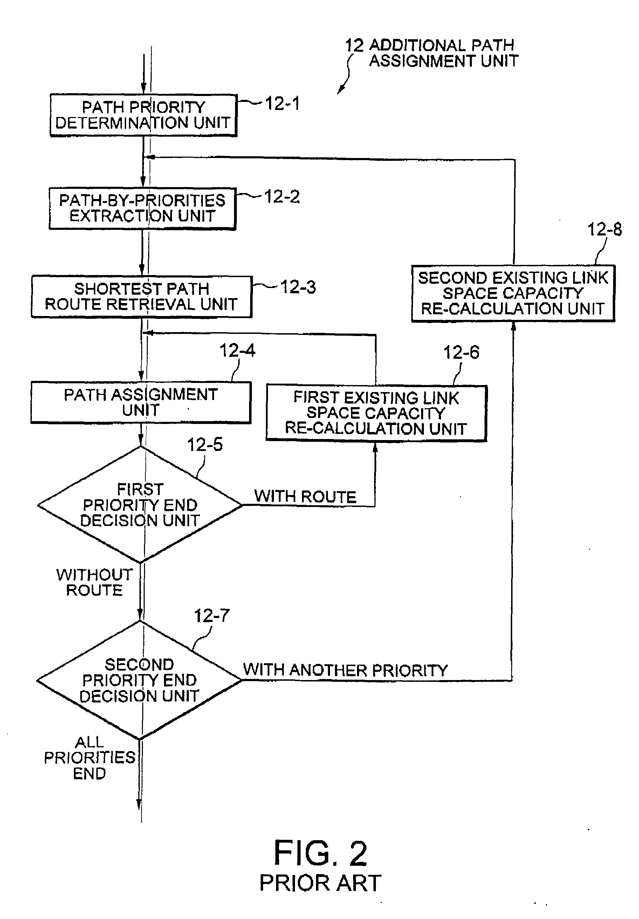

Fig. 2 is a flow chart showing the operations of the additional path assignment unit 12 of Fig. 1. In Fig. 2, the additional path assignment unit 12 includes a path priority determination unit 12-1, a path-by-priorities extraction unit 12-2, a shortest path route retrieval unit 12-3, a path assignment unit 12-4, a first priority end decision unit 12-5 and a first existing link space capacity re-calculation unit 12-6. The path priority determination unit 12-1 determines the priorities to all additional paths according to the path transmission rates as the path attributes thereby to re-arrange the additional paths in the order from the higher to lower priorities. The path-by-priorities extraction unit 12-2 compiles and extracts the paths of the same priority in the order from the higher priorities.

The shortest path route retrieval unit 12-3 extracts a transmission link capable of assigning the paths, as extracted by the path-by-priorities extraction unit 12-2, to the space portions. On the other hand, the shortest path route retrieval unit 12-3 compiles the extracted paths separately of sending/addressed stations, and determines the shortest path utilizing the space portion of the transmission link for the compiled paths. The pass assignment unit 12-4 assigns such ones of the paths extracted by the path-by-priorities extraction unit 12-2 as have their routes found by the shortest path route retrieval unit 12-3, while being compiled in the number to be assigned for the paths of all the priorities in the order from the higher priority, to the routes. Here, the paths are re-arranged in the order of the shorter total path length, where the order of the less transmission links to be passed is the same.

The first priority end decision unit 12-5 examines whether or not there is a path of a next priority, if there is an unused space portion of the transmission link. The first existing link space capacity re-calculation unit 12-6 calculates transmission link unused space information if there is left the path of the next priority, and the routine returns to the path assignment unit 12-4. The operations thus far described are repeated till the end of all the priorities by a second priority end decision unit 12-7 and a second existing link space capacity re-calculation unit 12-8.

Other examples of the technique of this kind are disclosed in Japanese Patent No. 2655467 and Japanese Unexamined Patent Publications (JP-A) Nos. Tokkai-Hei 10-285175 (285175/1998), Tokkai-Hei 10-107796 (107796/1998), Tokkai-Hei 9-83546 (83546/1997) and Tokkai-Hei 8-51432 (51432/1996).

The route design system thus constructed is troubled by a problem that the design takes a long time, because the operation of the first existing link space capacity re-calculation unit 12-6 is performed each time the demand is received. The method of solving that problem is disclosed in none of the foregoing Publications.

Therefore, an object of the invention is to provide a route design system and a route design method which is capable of realizing a high-speed accommodation design.

The present invention provides a route design system among nodes from at least one of starting node through a plurality of relay nodes to a terminal node. This route design system comprises: a route candidate design unit for designing a plurality of different route candidates from the starting node to the terminal node; and an accommodation unit for accommodating a demand in a predetermined one of the routes designed by the route candidate design unit, according to a predetermined procedure.

A route design method according to the present invention designs nodes from at least one of starting node through a plurality of relay nodes to a terminal node. This route design method comprises: a route candidate design step for designing a plurality of different route candidates from the starting node to the terminal node; and an accommodation step for accommodating a demand in a predetermined one of the routes designed by the route candidate design step, according to a predetermined procedure.
Fig. 1 is flow chart for explaining a route design technique of the prior art;
Fig. 2 is a flow chart for explaining the route design technique of Fig. 1 in detail;
Fig. 3 is a flow chart for explaining a route design system according to a first embodiment of the present invention;
Fig. 4 is a structure diagram of one example of a communication network to which the present invention is applied;
Fig. 5 is a flow chart for explaining a route candidate design unit of Fig. 3;
Fig. 6 is a flow chart for explaining a primary accommodation design unit of Fig. 3;
Fig. 7 is a flow chart for explaining a secondary accommodation design unit of Fig. 3;
Fig. 8 is a flow chart for explaining an accommodation release unit of Fig. 3;
Fig. 9 is a flow cart for explaining a secondary accommodation design unit according to a second embodiment of the present invention; and
Fig. 10 is a flow chart for explaining an accommodation release unit according to the second embodiment of the present invention.

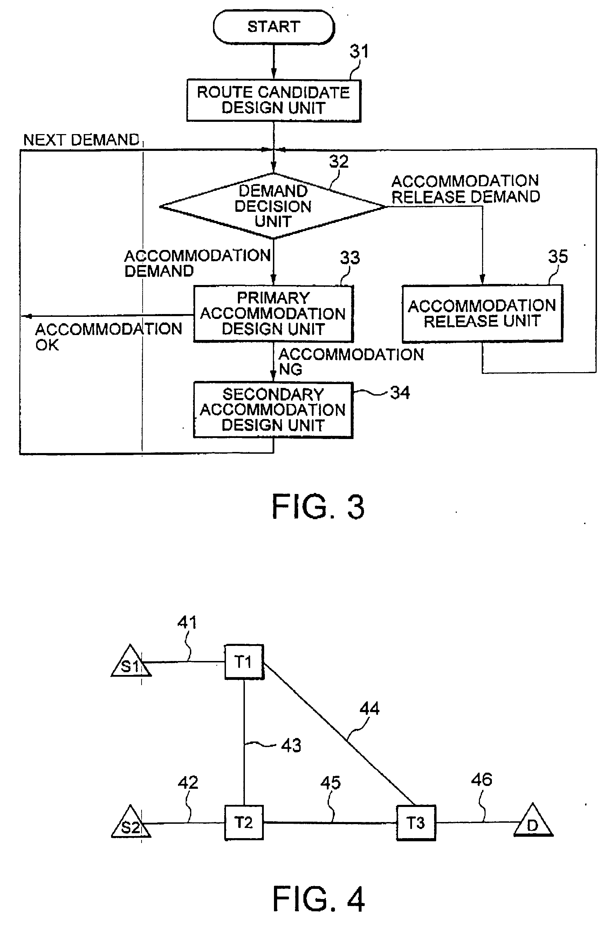

First of all, the summary of the present invention will be described with reference to Fig. 3. The present invention contemplates to provide a communication network route design system for making a high-speed accommodation design possible.

in Fig. 3 a route candidate design unit 31 designs route candidates among nodes, and assigns available bands for the individual route candidates. The route candidate design unit 31 also arrays the individual route candidates in the order of priorities. A primary accommodation design unit 33 tries accommodation of a demand in a route candidate of a first priority. Where the route candidate of the first priority has a sufficient space band, the design is ended by accommodating the demand in the first priority route candidate. Where the space band is not sufficient, a secondary accommodation design unit 34 tries to accommodate the demand in a route of a second priority. On the other hand, the next and later route candidates to be utilized in the primary accommodation design unit 33 are switched to the second priority route. Thus, the chance to complete the design by the time of the primary accommodation design is increased to make the high-speed accommodation design possible.

With reference to Fig. 4, here will be described a structure of the communication network to which the present invention is applied. Fig. 4 is a structure diagram of one example of the communication network to which the present invention is applied. As shown in Fig. 4, the communication network is constructed to include starting modes S1 and S2, relay nodes T1, T2 and T3, and a terminal node D. The starting node S1 and the relay node T1 are connected via a transmission line 41, and the starting node S2 and the relay node T2 are connected via a transmission line 42. The relay nodes T1 and T2 are connected via a transmission line 43, and the relay nodes T1 and T3 are connected via a transmission line 44. The relay nodes T2 and T3 are connected via a transmission line 45, and the relay node T3 and the terminal node D are connected via a transmission line 46.

A route design system according to a first embodiment of the present invention will be described with reference to Fig. 3. Fig. 3 is a flow chart for explaining the structure of the route design system. As shown in Fig. 3, the route design system is constructed to include a route candidate design unit 31, a demand decision unit 32, the primary accommodation design unit 33, the secondary accommodation design unit 34 and an accommodation release unit 35.

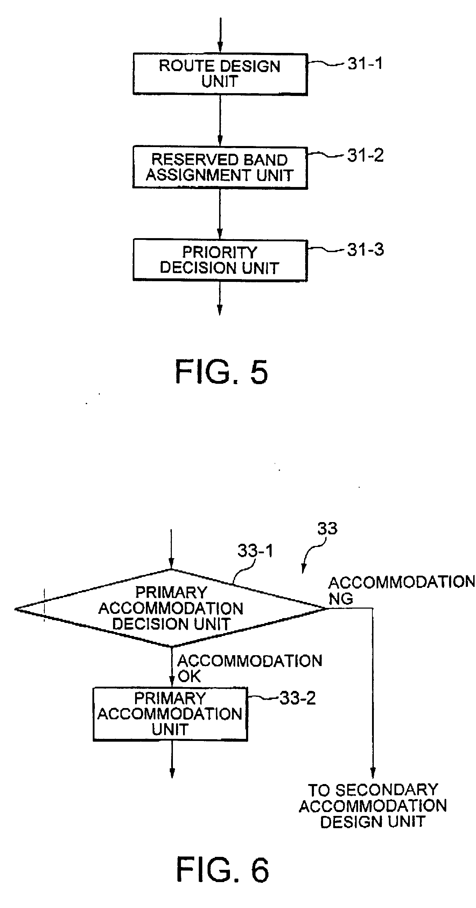

Fig. 5 is a flow chart for explaining the functions of the route candidate design unit 31 of Fig. 3. First of all, a route design unit 31-1 designs a plurality of routes between two arbitrary nodes. A reserved band assignment unit 31-2 assigns a band, which can be utilized in a plurality of designed routes, as a reserved band. A priority decision unit 31-3 calculates the priorities of all the designed routes. The priorities are determined from a total hop number of routes and the size of the reserved band, and route candidates are nominated in the order of the routes of higher priorities. Here, the total hop number is the sum of the transmission lines shown in Fig. 4. For example, the total hop number from the starting node S1 via the relay nodes T2 and T3 to the terminal node D is 3.

Fig. 6 is a flow chart for explaining a routine at the primary accommodation design unit 33 of Fig. 3. The procedure at the primary accommodation design unit 33 is executed if it is decided at the demand decision unit 32 of Fig. 3 that the demand is an accommodation demand. In Fig. 6, a primary accommodation decision unit 33-1 inspects a sending node and an addressed node of the demand received, and retrieves the route candidate of the first priority between the nodes designed by the route candidate design unit 31. The primary accommodation decision unit 33-1 decides an accommodation OK, if a space band more than that demanded by the demand is in the route candidate of the first priority. With the decision of the accommodation OK, a primary accommodation unit 33-2 selects an accommodation route of the demand as the route candidate of the first priority, and subtracts the band demanded by the accommodated demand, from the space band of the route candidate of the first priority.

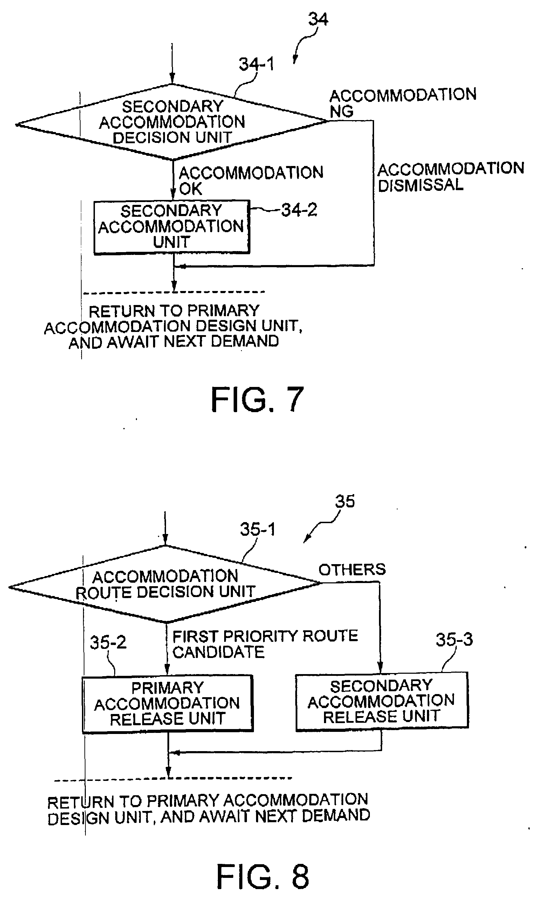

Fig. 7 is a flow chart for explaining the secondary accommodation design unit 34 of Fig. 3. In Fig. 7, a secondary accommodation decision unit 34-1 decides it in the order of route candidates of a second priority whether or not there is a space band more than the band demanded by the demand. The secondary accommodation decision unit 34-1 decides the accommodation OK if it finds a route candidate having a sufficient space band. A secondary accommodation unit 34-2 selects the route candidate decided to be the accommodation OK, as the accommodation route of the demand, and subtracts the band demanded by the accommodated demand, from the space band of that route candidate. Moreover, the secondary accommodation unit 34-2 exchanges the route candidate of the first priority, as used in the primary accommodation design unit 33, for the route accommodated here.

Where it is decided at the demand decision unit 32 that the demand is an accommodation release demand, the space band is updated by the procedure of the flow chart of Fig. 8. Fig. 8 is a flow chart for explaining the accommodation release unit 35 of Fig. 3. In Fig. 8, an accommodation route decision unit 35-1 decides whether or not the demand accommodated in the route candidate of the first priority is released. If the demand accommodated in the route candidate of the first priority is released, a primary accommodation release unit 35-2 adds the band of the demand to be released, to the space band of the route candidate of the first priority. If the demand accommodated in the route candidate of the first priority is not released, a secondary accommodation release unit 35-3 retrieves the route candidate in which the demand demanded to be released is accommodated, and adds the band of the demand to be released, to the space band of the retrieved route candidate.

Here will be specifically described the operation example of the first embodiment in connection with the communication network shown in Fig. 4. Here are noted two sets of routes from the starting node S1 to the terminal node D and from the starting node S2 to the terminal node D. The route design unit 31-1 designs routes R1 and R2 from the starting node S1 to the terminal node D and routes R3 and R4 from the starting node S2 to the terminal node D, respectively, in the following manners.
- R1:: S1 - T1 - T3 - D;
- R2:: S1 - T1 - T2 - T3 - D;
- R3:: S2 - T2 - T1 - T3 - D; and
- R4:: S2 - T2 - T3 - D.

Next, the reserved band assignment unit 31-2 assigns the reserved bands to the individual routes R1 to R4. If the band of all links between the individual links is 60 MBytes/sec and is equivalently assigned, the band to be assigned to the individual routes is 15 MBytes/sec. Next, the priority decision unit 31-3 executes the priority decision between the routes R1 and R2 from the starting node S1 to the terminal node and the priority decision between the routes R3 and R4 from the starting node S2 to the terminal node D. If the route having the smaller total hop number is made prior, the routes R1 and R4 are the first priority ones.

Here will be specifically described the operations of the case in which the accommodation demand is received. When the demand decision unit 32 receives an accommodation demand d1 of 10 MBytes/sec from the starting node S1 to the terminal node D, the routine transfers to the primary accommodation design unit 33. In this primary accommodation design unit 33, the primary accommodation decision unit 33-1 retrieves the route candidate R1 of the first priority from the starting node S1 to the terminal node D. The route candidate R1 of the first priority does not accommodate any demand yet so that it has a space band of 15 MBytes/sec. In this case, the primary accommodation decision unit 33-1 decides that the demand d1 of 10 MBytes/sec is the accommodation OK. With the decision of the accommodation OK, the primary accommodation unit 33-2 selects the route of the demand d1 as the route candidate R1 of the first priority, and calculates the space band of the route candidate R1 of the first priority by 15 - 10 = 5 MBytes/sec. A next demand is awaited.

When an accommodation demand d2 of 10 MBytes/sec from the starting node S1 to the terminal node D is received again as the next demand, the routine advances like the accommodation demand d1 from the demand decision unit 32 to the primary accommodation decision unit 33-1. At this time, the accommodation demand d2 of 10 MBytes/sec is received although the space band of the route candidate R1 of the first priority is only 5 MBytes/sec, so that the primary accommodation decision unit 33-1 decides the accommodation NG, and the routine advances to the secondary accommodation design unit 34. When the secondary accommodation decision unit 34-1 retrieves the route of the second priority from the starting node S1 to the terminal node D, the route candidate R2 is found. This route candidate R2 does not accommodate any demand yet, so that it has a space band of 15 MBytes/sec. In this case, the secondary accommodation decision unit 34-1 decides that the demand d2 of 10 MBytes/sec can be accommodated. Therefore, the secondary accommodation unit 34-2 selects the route candidate R2 as the route for the demand d2 and calculates the space band of the route candidate R2 by 15 - 10 = 5 MBytes/sec. Moreover, the secondary accommodation unit 34-2 changes the route of the first priority from R1 to R2.

When the accommodation release demand of the demand d1 finally comes, the routine advances from the demand decision unit 32 to the accommodation release unit 35. The accommodation route decision unit 35-1 retrieves the accommodation route of the demand d1. If it is found that the accommodation route R1 of the demand d1 is not the route candidate of the first priority, the routine advances to the second accommodation release unit 35-3. The secondary accommodation release unit 35-3 returns the space band of the accommodation route R1 to 5 + 10 = 15 MBytes/sec.

Thus according to the route design system of the first embodiment, it is possible to shorten the design time period and to increase the number of demands to be processed for a unit time period. This is because the design is divided into primary and secondary ones thereby to increase the chances of completing the design only by the primary design of no route retrieval.

Here will be described a second embodiment of the present invention. In the first embodiment, at the reserved band assignment unit 31-2, the band of the link is wholly distributed to the route candidates, In the second embodiment, on the contrary, a preliminary band is retained, and the remainder is distributed among the route candidates.

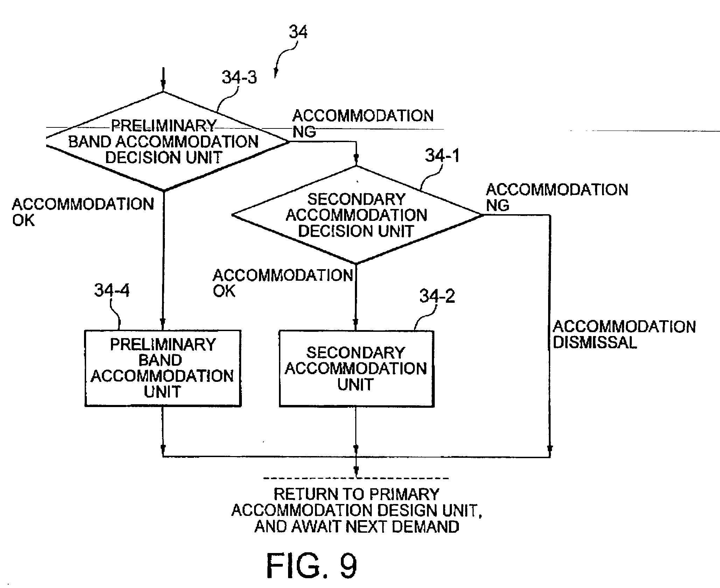

Fig. 9 is a flow chart for explaining the secondary accommodation design unit 34 in the second embodiment. In Fig. 9, the preliminary band is handled as the band which can be utilized by any of the route candidates R1 to R4. In a preliminary band accommodation decision unit 34-3, it is decided whether or not the demand, as could not be accommodated in the primary accommodation design unit 33, can be accommodated by using the space band of the route candidate of the first priority and the preliminary band. If the accommodation OK, the routine advances to a preliminary band accommodation unit 34-4. in this preliminary band accommodation unit 34-4, the accommodation route of the demand is selected as the first priority route, and the space band of the route candidate of the first priority and the space bands of the preliminary bands of all the links on the route candidate of the first priority are updated. If the accommodation NG is decided by the preliminary band accommodation decision unit 34-3, on the other hand, the routine advances to the secondary accommodation decision unit 34-1. The subsequent operations are similar to those of the first embodiment having been described.

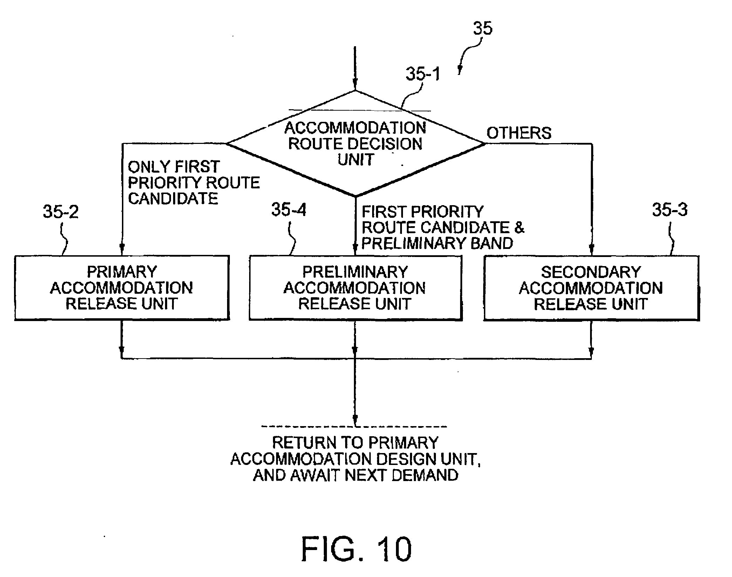

Fig. 10 is a flow chart for explaining the accommodation release unit 35 in the second embodiment. In Fig. 10, if the release of the demand accommodated by using the route candidate of the first priority and the preliminary band is decided at the accommodation route decision unit 35-1, a preliminary accommodation release unit 35-4 updates the space band of the route candidate of the first priority and the space bands of the preliminary bands of all the links on the route candidate of the first priority are updated.

Here will be specifically described the operations of the second embodiment with reference to Fig. 4. In this second embodiment, a reserved band of 10 MBytes/sec is assigned to each of the route candidates R1 to R4, if the preliminary band of 20 MBytes/sec is assigned to each link whereas the remainder of 40 MBytes/sec is equivalently assigned to the route candidates. When the demand d1 of the band of 5 MBytes/sec is received from the starting node S1 to the terminal node D, the demand d1 is accommodated like the first embodiment by the route candidate R1 of the first priority. As a result, the space band of the route candidate R1 of the first priority is calculated by 10 - 5 = 5 MBytes/sec, When the demand d2 of a band of 10 MBytes/sec is subsequently accommodated from the starting node S1 to the terminal node D, the demand d2 cannot be accommodated by the space band of the route candidate R1 of the first priority. In this case, the routine advances to the secondary accommodation design unit 34 of Fig. 9.

In the secondary accommodation design unit 34, the space bands of the preliminary bands of the link on the route candidate R1 of the first priority and the links between the starting node S1 - the relay node T1, between the relay nodes T1 - T3 and between the relay node T3 - the terminal node D are examined at first at the preliminary band accommodation decision unit 34-3. In this preliminary band accommodation decision unit 34-3, all the space bands are 20 MBytes/sec, and it is decided that the demand d2 can be accommodated. With this decision of the accommodation OK, the routine advances to the preliminary band accommodation unit 34-4. At this preliminary band accommodation unit 34-4, the space band of the route candidate R1 of the first priority accommodates 5 MBytes/sec to reduce the space band to 0 MBytes/sec. At the preliminary band accommodation unit 34-4, moreover, the space bands of the preliminary bands of the link on the route candidate R1 of the first priority and the links between the starting node S1 - the relay node T1, between the relay nodes T1 - T3 and between the relay node T3 - the terminal node D are reduced by the band which could not be accommodated in the route candidate R1 of the first priority. Here, the band, as could not be accommodated by the route candidate R1 of the first priority, is 10 - 5 = 5 MBytes/sec. As a result, the space band of the preliminary band of each link is 20 - (10 - 5) = 15 MBytes/sec.

Here will be considered the case of releasing the demand d2. At the accommodation route decision unit 35-1 of Fig. 10, it is decided that the demand d2 is accommodated by using the route candidate of the first priority and the preliminary band, and the routine advances to the preliminary accommodation release unit 35-4. At this preliminary accommodation release unit 35-4, 5 MBytes/sec, as accommodated in the route candidate R1 of the first priority, of the band of the demand d2 is returned to the space band of the route candidate R1 of the first priority, to set the space band to 5 MBytes/sec. The preliminary accommodation release unit 35-4 further returns 5 MBytes/sec, as used for accommodating the demand d2, to the space bands of the preliminary bands of all the links on the route candidate R1 of the first priority, to increase each band to 15 + 5 = 20 MBytes/sec.

If the accommodation route is thus designed by preparing the preliminary band, this preliminary band can be flexibly shared among the bands of the route candidates for accommodating the demands.

The present invention provides a route design system among nodes from a starting node through at least one relay node to a terminal node. This route design system comprises: a route candidate design unit for designing a plurality of different route candidates from the starting node to the terminal node; and an accommodation unit for accommodating a demand in a predetermined one of the routes designed by the route candidate design unit, according to a predetermined procedure. The route design system is constructed by designing the plurality of different route candidates in advance and by accommodating the demand in the order from the route of the highest priority. Therefore, the trouble of retrieving the route candidate in each response to the demand, so that a high-speed accommodation can be designed.

## Claims

1. A route design system among nodes from at least one of starting node (S1, S2) through a plurality of relay nodes (T1, T2, T3) to a terminal node (D), which is characterized in that said system comprises:
route candidate design means (31) for designing a plurality of different route candidates from said at least one of starting node to said terminal node; and
accommodation means (32,33,34) for accommodating a demand in a predetermined one of the routes designed by said route candidate design means, according to a predetermined procedure.

2. A route design system according to Claim 1,
wherein said route candidate design means includes: a band assignment unit (31-2) for assigning bands available in the individual route candidates to said plurality of different route candidates; and a priority ordering unit (31-3) for ordering the priorities of said individual route candidates, and
wherein said accommodation means includes a decision unit (32, 33) for deciding whether or not the route of the first priority has a space band no more than the band demanded by said route of the first priority, whereby said demand is accommodated in said route of the first priority if said decision unit decides that said space band is had.

3. A route design system according to Claim 2,
wherein said accommodation means accommodates said demand in the route of a second priority, if said decision unit decides that said space band is not had.

4. A route design system according to Claim 3,
wherein said accommodation means further includes an exchange unit (34-2) for exchanging said route of the first priority and said route of the second priority after said demand was accommodated in said route of the second priority.

5. A route design system according to Claim 1,2,3, or 4,
wherein said route candidate design means includes: a band assignment unit (31-2) for assigning, after a preliminary band was retained, the remaining bands to said plurality of different route candidates; and a priority ordering unit (31-3) for ordering the priorities of said individual route candidates, and
wherein said accommodation means includes a decision unit (32, 33) for deciding whether or not the route of the first priority has a space band no more than the band demanded by said route of the first priority, whereby said demand is accommodated in said route of the first priority if said decision unit decides that said space band is had.

6. A route design system according to Claim 5,
wherein said accommodation means accommodates said demand by using the space band of said route of the first priority and said preliminary band, if said decision unit decides that said space band is not had and if the total of the space band of said route of the first priority and said preliminary band is no less than the band demanded by said demand.

7. A route design method among nodes from at least one of starting node (S1, S2) through a plurality of relay nodes (T1, T2, T3) to a terminal node (D), which is characterized in that said method comprises:
a route candidate design step (31) for designing a plurality of different route candidates from said starting node to said terminal node; and
an accommodation step (32, 33, 34) for accommodating a demand in a predetermined one of the routes designed by said route candidate design step, according to a predetermined procedure.

8. A route design method according to Claim 7,
wherein said route candidate design step includes: a band assignment step (31-2) for assigning bands available in the individual route candidates to said plurality of different route candidates; and a priority ordering step (31-3) for ordering the priorities of said individual route candidates, and
wherein said accommodation step includes a decision step (32, 33) for deciding whether or not the route of the first priority has a space band no more than the band demanded by said route of the first priority, whereby said demand is accommodated in said route of the first priority if said decision step decides that said space band is had.

9. A route design method according to Claim 8,
wherein said accommodation step accommodates said demand in the route of a second priority, if said decision step decides that said space band is not had.

10. A route design method according to Claim 9,
wherein said accommodation step further includes an exchange step (34-2) for exchanging said route of the first priority and said route of the second priority after said demand was accommodated in said route of the second priority.

11. A route design method according to Claim 7, 8,9 or 10,
wherein said route candidate design step includes: a band assignment step (31-2) for assigning, after a preliminary band was retained, the remaining bands to said plurality of different route candidates; and a priority ordering step (31-3) for ordering the priorities of said individual route candidates, and
wherein said accommodation step includes a decision step (32, 33) for deciding whether or not the route of the first priority has a space band no more than the band demanded by said route of the first priority, whereby said demand is accommodated in said route of the first priority if said decision step decides that said space band is had.

12. A route design method according to Claim 11,
wherein said accommodation step accommodates said demand by using the space band of said route of the first priority and said preliminary band, if said decision step decides that said space band is not had and if the total of the space band of said route of the first priority and said preliminary band is no less than the band demanded by said demand.
